# EUROPEAN PATENT SPECIFICATION

(11) **EP 1 162 086 B1**
(45) Date of publication and mention of the grant of the patent: **23.08.2006**
(21) Application number: 01305017.4
(22) Date of filing: 08.06.2001
(51) Int. Cl.: B60C 9/00, B60C 9/20, B60C 9/22, D07B 1/06

(54) **Pneumatic tyre**
Luftreifen
Pneumatique

(30) Priority: 09.06.2000 JP 2000174083
(43) Date of publication of application: 12.12.2001
(73) Proprietor: SUMITOMO RUBBER INDUSTRIES LIMITED, Kobe-shi, Hyogo-ken (JP)
(72) Inventor: Miyazaki, Shinichi, Sumitomo Rubber Indust. Ltd., Kobe-shi, Hyogo-ken (JP); Yamazaki, Kazumi, Sumitomo Rubber Indust. Ltd., Kobe-shi, Hyogo-ken (JP); Toda, Osamu, Sumitomo Rubber Indust. Ltd., Kobe-shi, Hyogo-ken (JP)
(74) Representative: Manitz, Finsterwald & Partner GbR

(56) References cited:
- EP-A- 0 157 716
- EP-A- 0 414 892
- US-A- 5 524 687

## Description

The present invention relates to a pneumatic tyre with an improved belt being capable of decreasing the tyre weight and rolling resistance.

In recent years, it is strongly required to decrease fuel consumption of automobiles from environmental aspects. Accordingly, the tyres are also strongly required to have decreased tyre weight and rolling resistance.

On the other hand, pneumatic tyres provided with a tread reinforcing belt made of steel cords of twisted steel filaments are widely used in various automobiles, e.g. passenger cars, light-trucks, trucks/buses, etc.

In such pneumatic tyres, therefore, an attempt to decrease the weight of the steel cord belt by minimising the diameter of the steel cords was made. But, such multifilament steel cords greatly decrease in bending rigidity when the cord diameter is decreased, and as a result, the cornering power is decreased which deteriorates the steering stability.

EP-A-414 892 discloses a pneumatic tire according to the pre-characterizing portion of claim 1. This document teaches to avoid a cord breakage phenomenon by disposing, additionally to at least two belt plies, a rubber reinforcing layer substantially adjacent to the belt ply layer.

Document US-A-5,524,687 discloses a pneumatic vehicle tire having two monofilament cord plies, wherein the monofilament cords in one of the two monofilament cord plies are inclined reversely to the monofilament cords in the other with respect to the tire equator.

It is therefore, an object of the present invention to provide a pneumatic tyre, in which the weight and rolling resistance of the tyre is decreased without sacrificing the steering stability and the like.

This object is achieved by the features of claim 1.

Embodiments of the present invention will now be described in detail in conjunction with the accompanying drawings, in which:
Fig.1 is a cross sectional view of a radial tyre for passenger cars according to the present invention;

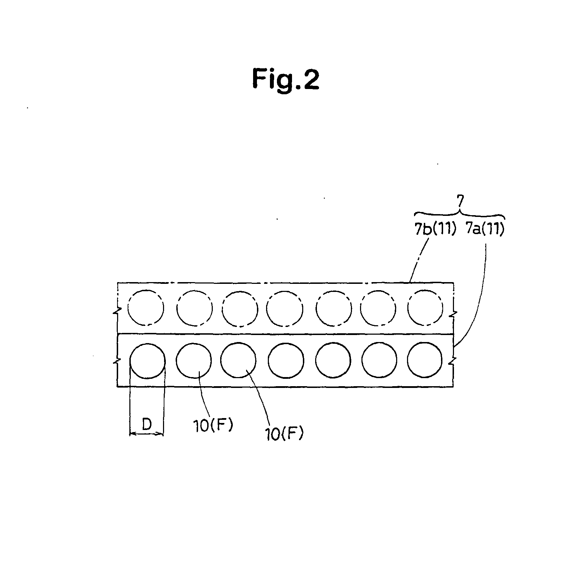

Fig.2 is an enlarged schematic cross sectional view of the breaker thereof;
Fig.3A and Fig.3B each show an example of the waved monofilament cord; and
Fig.4 is a cross sectional view of a heavy duty radial tyre for trucks and buses according to the present invention.

In the drawings, pneumatic tyre 1 according to the present invention comprises a tread portion 2, a pair of sidewall portions 3, a pair of axially spaced bead portions 4 each with a bead core 5 therein, a carcass 6 extending between the bead portions 4, and a belt disposed radially outside the carcass 6 in the tread portion 2.

The carcass 6 comprises at least one ply of cords arranged radially at an angle of from 75 to 90 degrees with respect to the tyre equator and extending between the bead portions 4 through the tread portion 2 and sidewall portions 3 and turned up around the bead core 5 in each of the bead portions 4 from the inside to the outside of the tyre to form a pair of turned up portions 6B and a main portion 6A therebetween.

For the carcass cords, an organic fibre cord, e.g. nylon, rayon, polyester, aromatic polyamide and the like, made of a number of organic filaments or fibres twisted together can be used. Also, steel cords made of a plurality of steel filaments twisted together can be used.

Each of the bead portions 4 is provided with a bead apex 8 made of a hard rubber compound extending radially outwardly while tapering towards its radially outer end from its radially inner end adjoining the bead core 5. In case that the carcass is provided with the turned up portions 6B, the bead apex 8 is usually disposed between the carcass ply turned up portion 6B and main portion 6A.

The belt comprises a breaker 7 and optionally a band.

The breaker 7 comprises two crossed plies of parallel cords laid at an angle of from 15 to 30 degrees with respect to the tyre equator. Here, the term "cross plies" means that the cords of one ply are inclined reversely to the cords of the other ply with respect to the tyre equator.

The band (not shown) is disposed radially outside the breaker 7 to tighten the tread portion. The band can be formed by spirally winding at least one cord or winding a strip of parallel cords. In any case, the cord angle is not more than 5 degrees with respect to the tyre equator.

As to the above-mentioned two crossed plies of the breaker 7, at least one of, preferably each of them is a monofilament cord ply 11 made of monofilament cords 10 laid parallel with each other. In the monofilament cord ply 11, the cord count of the monofilament cords 10 is in a range of from 30 to 50 (/5cm width).

The monofilament cord 10 is a single metallic filament F having a substantially circular cross sectional shape. The diameter D thereof is set in a range of from 0.35 to 0.70 mm. The monofilament cord 10 has a tensile strength of from 2800 to 3700 Newton/sq.mm, preferably 3000 to 3600 Newton/sq.mm, and a bending rigidity of from 35 to 260 gf cm, preferably 60 to 240 gf cm. Thus, the monofilament cord 10 is greatly increased in tensile strength and bending rigidity. By using such monofilament cord 10, a sufficient cornering power can be obtained, while maintaining necessary cord durability, and a weight reduction can be achieved without sacrificing the ride comfort, while maintaining good steering stability.

If the tensile strength is less than 2800 Newton/sq.mm, the cord rupture strength becomes insufficient when the rigidity of the cord is properly adjusted. If the tensile strength is more than 3700 Newton/sq.mm, the toughness and fatigue resistance of the cord are greatly decreased. In any case, the cord durability and the belt durability decrease.

If the bending rigidity is less than 35 gf cm (0.343 Newton cm), the cornering power becomes insufficient for improving the steering stability. If the bending rigidity is more than 260 gf cm (2.548 Newton cm), ride comfort deteriorates.

The bending rigidity of the cord was measured with a V-5 stiffness tester model 150-D of Taber Industries, U.S.A. as a force in gram centimetre required to bend the cord 15 degrees.

If the diameter D is less than 0.35 mm, the cord rupture strength and rigidity are insufficient. If the diameter D is more than 0.70 mm, the rigidity becomes too high and the ride comfort deteriorates.

If the cord count is less than 30 (/5cm), the belt rigidity becomes insufficient, shear strain between the plies increases, and the tendency toward cord rupture and belt edge separation increases. If the cord count is more than 50 (/5cm), the weight and cost increase and the belt becomes inferior in the working property.

In order to increase the tensile strength and bending rigidity up to the above-mentioned ranges, a high-carbon steel whose carbon content is in a range of from 0.80 to 0.98 weight %, preferably 0.92 to 0.98 weight % is preferably used as the material of the monofilament cord. In case of need, chromium can be further added in order to control the pro-eutectoid cementite thereof.

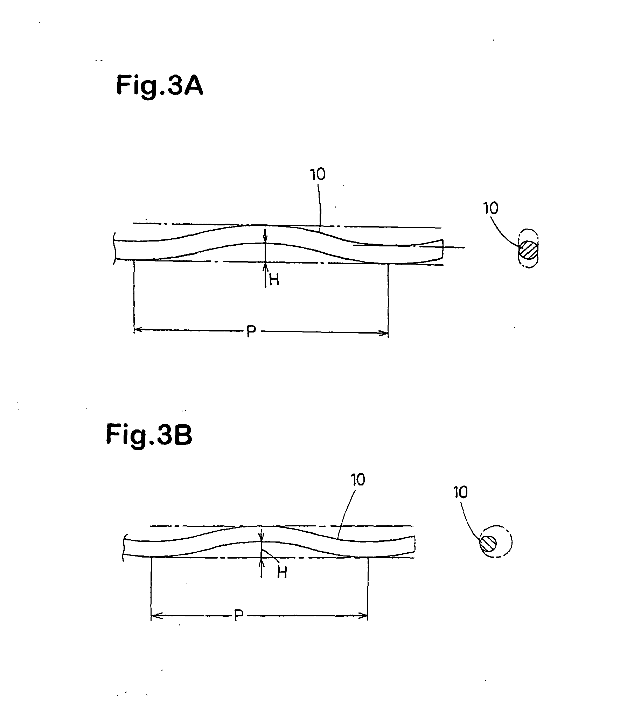

The above-mentioned monofilament cord 10 is a non-waved cord, namely, the cord is substantially straight when free of load. But, it is also possible to use a waved cord as shown in Figs.3A and 3B. Fig.3A shows an example which is two-dimensionally waved. Fig.3B shows an example which is three-dimensionally waved (spirally waved). From a point of view of steering stability, it is preferable that the wave pitch P is increased to more than 14.0 mm, and the wave height H is decreased into a range of from 0.002 to 0.02 times the wave pitch P.

### Passenger car radial tyre

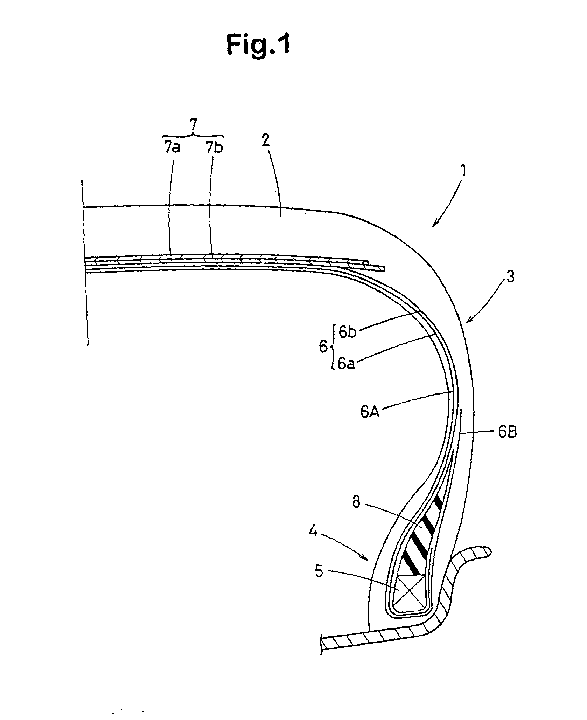

Fig.1 shows an embodiment of the present invention which is a radial tyre for passenger cars.

In this embodiment, the carcass 6 is composed of two plies 6a and 6b of organic fibre cords (polyester fibre cords) arranged at almost 90 degrees with respect to the tyre equator.

The belt includes a breaker 7 and a band (not shown).

The band is disposed radially outside the breaker 7 to prevent the breaker from being lifted during high speed running. The band is formed by spirally winding organic fibre cords (in this example nylon cords) at an angle of not more than 5 degrees with respect to the tyre equator. The band extends over at least breaker edge portions to restrict their motion. It is of course possible to form the band to extend all over the breaker width.

The breaker 7 is composed of two crossed plies 7a and 7b of parallel cords laid at an angle of from 15 to 30 degrees with respect to the tyre equator.

In this example, all of the breaker plies 7a and 7b are a monofilament cord ply 11 made of monofilament cords 10 laid parallel with each other.

In the case of a passenger car type, the diameter D is preferably set in a range of from 0,35 to 0,55 mm.

### Heavy duty radial tyre

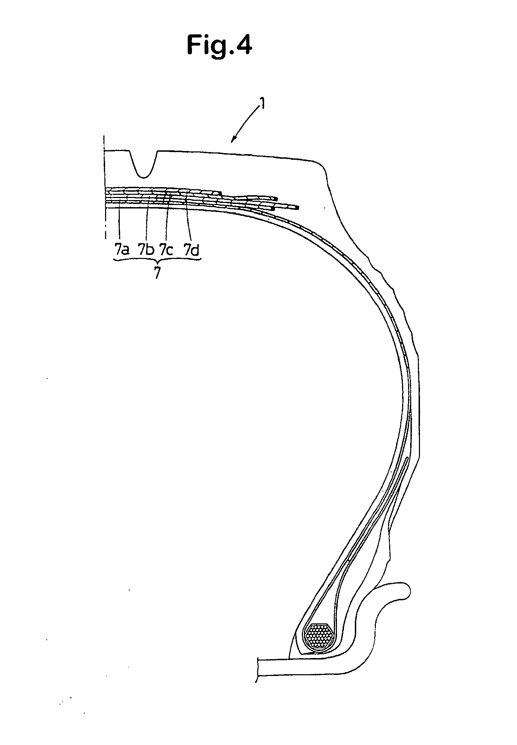

Fig.4 shows another embodiment of the present invention which is a heavy duty radial tyre for trucks and buses.

In this embodiment, the carcass 6 is composed of a single ply of multifilament steel cords arranged at 90 degrees with respect to the tyre equator.

The belt is composed of a breaker 7 only.

In the case of a heavy duty radial tyre, the breaker 7 is preferably composed of three plies 7a, 7b and 7c or four plies 7a, 7b, 7c and 7d. The radially innermost first ply 7a is made of parallel cords laid at an angle of from 45 to 70 degrees. The radially outer second, third and fourth plies 7b, 7c and 7d are each made of parallel cords laid at an angle of from 15 to 30 degrees. As to the inclining direction of the cords in each ply with respect to the tyre equator, the first and second breaker plies 7a and 7b are the same but reverse to the third and fourth breaker plies 7c and 7d. For example, the first and second breaker plies 7a and 7b have right side upward inclinations, and the third and fourth breaker plies 7c and 7d have left side upward inclinations.

As explained above, at least one, preferably two of the three or four breaker plies are the above-mentioned monofilament cord ply 11.

In the case of two monofilament cord plies 11, it is preferable that the first and fourth plies 7a and 7d or the second and third plies 7b and 7c are the monofilament cord ply 11.

Further, in the case of a heavy duty radial tyre, the diameter D is preferably set in a range of from 0.45 to 0.70 mm.

### Comparison Test

Test tyres were made and tested for the steering stability, ride comfort and rolling resistance.

### (1) Steering stability test

A test car provided on all the wheels with test tyres was run on a dry asphalt road surface of a tyre test course, and the test driver evaluated the steering stability into five ranks from the handling responsiveness, rigidity, road grip and the like. The larger the rank number, the better the steering stability.

### (2) Ride comfort test

The test car was run on dry rough roads (including asphalt road, stone-paved road and gravelled road) and the test driver evaluated the ride comfort into five ranks, based on harshness, damping, thrust-up, etc. The larger the rank number, the better the ride comfort.

### (3) Rolling resistance test

The rolling resistance was measured according to SAE J-1269. The results are indicated by an index based on Conventional tyre being 100. The larger the index number, the smaller the rolling resistance.

### (4) Tyre weight

The difference from a Conventional tyre is shown.

As described above, in the pneumatic tyres according to the present invention, the tyre weight and rolling resistance can be reduced to improve the fuel consumption, without deteriorating the ride comfort and the steering stability.

**Table 1 (Tyre size: 165/70R13 for passenger cars)**

| Tyre | Conventional | Ref.1 | Ex.1 | Ex.2 |
|---|---|---|---|---|
| Structure | Fig.1 | Fig.1 | Fig.1 | Fig.1 |
| Carcass | *1 | *1 | *1 | *1 |
| Breaker | | | | |
| Number of ply | 2 | 2 | 2 | 2 |
| Cord angle (deg.) | +20/-20 | +20/-20 | +20/-20 | +20/-20 |
| Cord count (/5cm) | 40 | 40 | 40 | 35 |
| Number of monofilament cord ply | 0 0 | | 2 | 2 |
| Weight of ply (g/sq.m) | 1150 | 1150 | 1000 | 1240 |
| Breaker cord | | | | |
| Structure | 1X5X0.25 | 1X5X0.25 | monofilament | monofilament |
| Code diameter (mm) | 0.67 | 0.67 | 0.45 | 0.5 |
| Carbon content (wt%) | 0.82 | 0.92 | 0.92 | 0.92 |
| Tensile strength (Newton/sq.mm) | 2600 | 3450 | 3400 | 3350 |
| Bending rigidity (gf cm) | 28 | 33 | 56 | 84 |
| Weight (g/m) | 1.92 | 1.92 | 1.25 | 1.55 |
| Rupture strength (Newton) | 638 | 846 | 541 | 658 |

| | | | | |
|---|---|---|---|---|
| Band | *2 | *2 | *2 | *2 |

| | | | | |
|---|---|---|---|---|
| Test Results | | | | |
| Tyre weight difference (g) | 0 | 0 | -121 | -115 |
| Steering stability | 2.9 | 2.9 | 3 | 3 |
| Ride comfort | 3 | 3.1 | 3 | 3 |
| Rolling resistance | 100 | 100 | 103 | 104 |

| | | | | |
|---|---|---|---|---|
| * 1: Two plies of 1670 dtex/2 polyester cords arranged at 90 degrees | | | | |
| * 2: One ply of spirally wound nylon-66 cords | | | | |

**Table 2 (Tyre size: 11R22.5 for trucks/buses)**

| Tyre | Conventional | Ex. |
|---|---|---|
| Structure | Fig.4 | Fig.4 |
| Carcass | | |
| Number of ply | 1 | 1 |
| Cord | steel (3+6X0.23) | steel (3+6X0.23) |
| Cord angle (deg.) | 90 | 90 |

| Breaker | | |
|---|---|---|
| Number of ply | 4 | 4 |
| Cord angles (deg.) *1 | +65/+20/-20/-20 | +65/+20/-20/-20 |
| Cord count (/5cm) | 26 | 37 |
| Cord structure *2 | | |
| First ply | multifilament | multifilament |
| Second ply | multifilament | monofilament |
| Third ply | multifilament | monofilament |
| Fourth ply | multifilament | multifilament |
| Weight of ply (g/sq.m) | 2260 | 1650 |
| Band | none | None |

| Test Results | | |
|---|---|---|
| Tyre weight | 0 | -105 |
| Steering stability | 2.9 | 3.1 |
| Ride comfort | 3 | 3 |
| Rolling resistance | 100 | 103 |

| | | |
|---|---|---|
| *1: first/second/third /fourth | | |
| *2: see the following table | | |

| Cord | multifilament | Monofilament |
|---|---|---|
| Structure | 3X0.20+6X0.35 | -- |
| Cord diameter D (mm) | 0.67 | 0.60 |
| Carbon content (wt%) | 0.82 | 0.92 |
| Tensile strength (Newton/sq.mm) | 2600 | 3300 |
| | | |
| Weight (g/m) | 4.4 | 2.22 |
| Rupture strength (Newton) | 1410 | 933 |
| Bending rigidity (gf cm) | 91 | 123 |

## Claims

1. A pneumatic tyre comprising a carcass (6) extending between bead portions (4) through a tread portion (2) and sidewall portions (3), and a belt (7) disposed radially outside the carcass in the tread portion, wherein the belt comprises at least one monofilament cord ply (7a,7b), the monofilament cord ply (11) being made of parallel monofilament steel cords (10), each monofilament steel cord being a single filament (F) having a circular cross sectional shape and a diameter of from 0.35 to 0.70 mm, the cord count of the monofilament cords in said monofilament cord ply being in a range of from 30 to 50 /5cm
said single filament (F) is made of high-carbon steel has a tensile strength of from 2800 to 3700 Newton/sq.mm and a bending rigidity of from 35 to 260 gf cm,
**characterised in that** the carbon content of said single filament is in a range of from 0.92 to 0.98 weight %.

2. A pneumatic tyre according to claim 1, **characterised in that** said at least one monofilament cord ply (11) is two monofilament cord plies (7b), and the monofilament cords (11) in one of the two monofilament cord plies are inclined reversely to the monofilament cords in the other with respect to the tyre equator.

3. A pneumatic tyre according to claim 1 or 2, **characterised in that** said belt includes a band disposed radially outside said at least one monofilament cord ply, said band is made of organic fibre cords wound at an angle of not more than 5 degrees with respect to the tyre equator.

4. A pneumatic tyre according to any of claims 1 to 3, **characterised in that** the monofilament cord (10) is not waved.

5. A pneumatic tyre according to any of claims 1 to 3, **characterised in that** the monofilament cord (10) is waved, the wave pitch (P) is more than 14.0 mm, and the wave height (H) is a range of from 0.002 to 0.02 times the wave pitch.

## Patentansprüche

1. Luftreifen, umfassend eine Karkasse (6), die sich zwischen Wulstabschnitten (4) durch einen Laufflächenabschnitt (2) und Seitenwandabschnitte (3) erstreckt, und einen Gürtel (7), der radial außerhalb der Karkasse in dem Laufflächenabschnitt angeordnet ist, wobei der Gürtel mindestens eine Monofilamentkordlage (7a, 7b) umfasst, wobei die Monofilamentkordlage (11) aus parallelen Monofilamentstahlkorden (10) hergestellt ist, wobei jeder Monofilamentstahlkord ein Einzelfilament (F) ist, das eine kreisförmige Querschnittsform und einen Durchmesser von 0,35 bis 0,70 mm aufweist, und die Kordzahl der Monofilamentkorde in der Monofilamentkordlage in einem Bereich von 30 bis 50/5 cm liegt,
wobei das Einzelfilament (F) aus Hartstahl hergestellt ist, eine Zugfestigkeit von 2800 bis 3700 Newton/mm² und eine Biegesteifigkeit von 35 bis 260 gfcm aufweist,
**dadurch gekennzeichnet, dass**
der Kohlenstoffgehalt des Einzelfilaments in einem Bereich von 0,92 bis 0,98 Gew.-% liegt.

2. Luftreifen nach Anspruch 1,
**dadurch gekennzeichnet, dass**
die mindestens eine Monofilamentkordlage (11) zwei Monofilamentkordlagen (7b) ist, und die Monofilamentkorde (11) in einer der zwei Monofilamentkordlagen umgekehrt zu den Monofilamentkorden in der anderen in Bezug auf den Reifenäquator geneigt sind.

3. Luftreifen nach Anspruch 1 oder 2,
**dadurch gekennzeichnet, dass**
der Gürtel ein Band umfasst, das radial außerhalb der mindestens einen Monofilamentkordlage angeordnet ist, wobei das Band aus organischen Faserkorden hergestellt ist, die unter einem Winkel von nicht mehr als 5 Grad in Bezug auf den Reifenäquator gewickelt sind.

4. Luftreifen nach einem der Ansprüche 1 bis 3,
**dadurch gekennzeichnet, dass**
der Monofilamentkord (10) nicht gewellt ist.

5. Luftreifen nach einem der Ansprüche 1 bis 3,
**dadurch gekennzeichnet, dass**
der Monofilamentkord (10) gewellt ist, die Wellenteilung (P) größer als 14,0 mm ist, und die Wellenhöhe (H) in einem Bereich des 0,002- bis 0,02-fachen der Wellenteilung liegt.

## Revendications

1. Bandage pneumatique comprenant une carcasse (6) qui s'étend entre les parties (4) de talon à travers une partie (2) de bande de roulement et des parties (3) de flanc, et une ceinture (7) disposée radialement à l'extérieur de la carcasse dans la partie de bande de roulement, dans lequel la ceinture comprend au moins un pli (7a, 7b) de câblé monofilament, le pli (11) de câblé monofilament étant fabriqué à partir de câblés métalliques monofilaments parallèles (10), chaque câblé métallique monofilament étant un filament unique (F) ayant une coupe transversale de forme circulaire et un diamètre compris entre 0,35 et 0,70 mm, le nombre de câblés monofilaments dans ledit pli de câblé monofilament étant dans une plage comprise entre 30 et 50 pour 5 cm,
ledit filament unique (F) est fabriqué à partir d'un acier à haute teneur en carbone et a une résistance à la traction comprise entre 2 800 et 3 700 Newton/mm² et une rigidité en flexion comprise entre 35 et 260 gf/cm, **caractérisé en ce que** la teneur en carbone dudit filament unique est dans une plage comprise entre 0,92 et 0,98 % en poids.

2. Bandage pneumatique selon la revendication 1,
**caractérisé en ce que** ledit au moins un pli (11) de câblé monofilament est constitué de deux plis (7b) de câblé monofilament, et les câblés monofilaments (11) dans l'un parmi les deux plis de câblé monofilament sont inclinés à l'inverse des câblés monofilaments dans l'autre parmi les deux plis de câblé monofilament par rapport à l'équateur du bandage pneumatique.

3. Bandage pneumatique selon la revendication 1 ou 2, **caractérisé en ce que** ladite ceinture comporte une bande disposée radialement à l'extérieur dudit au moins un pli de câblé monofilament, ladite bande étant fabriquée à partir de câblés de fibre organique enroulés selon un angle non supérieur à 5 degrés par rapport à l'équateur du bandage pneumatique.

4. Bandage pneumatique selon l'une quelconque des revendications 1 à 3, **caractérisé en ce que** le câblé monofilament (10) n'est pas ondulé.

5. Bandage pneumatique selon l'une quelconque des revendications 1 à 3, **caractérisé en ce que** le câblé monofilament (10) est ondulé, le pas (P) de l'ondulation est supérieur à 14,0 mm, et la hauteur(H) de l'ondulation est dans une plage comprise entre 0,002 et 0,02 fois le pas de l'ondulation.
